# EUROPEAN PATENT SPECIFICATION

(11) **EP 0 929 214 B1**
(45) Date of publication and mention of the grant of the patent: **13.09.2000**
(21) Application number: 97929433.7
(22) Date of filing: 03.07.1997
(51) Int. Cl.: A01L 9/00

(54) **SURGICAL SLIPPER FOR ANIMAL**
PANTOFFEL ZUM BEHANDELN VON TIEREN
CHAUSSON CHIRURGICAL POUR ANIMAL

(30) Priority: 23.07.1996 GB 9615433
(43) Date of publication of application: 21.07.1999
(73) Proprietor: Giltspur Scientific Limited, Ballyclare, County Antrim BT39 9AU (GB)
(72) Inventor: LOGAN, Ernest, Fergus, Ballyclare, County Antrim BT39 9NA (GB)
(74) Representative: Brunner, Michael John
(86) International application number: GB9701803
(87) International publication number: WO9803063

(56) References cited:
- DE-B- 1 000 178
- GB-A- 2 223 152
- US-A- 2 988 828
- US-A- 5 272 857

## Description

Our earlier patent, US-A-5272857 discloses a surgical slipper for cleft footed animals in either a left or right claw configuration, the slipper comprising a sole and upper which together define a cavity into which one claw of the cleft footed animal is, in use, fitted, with a lattice in the form of an array of intersecting ribs projecting from the underside of the sole; wherein the ribs are thick enough to hold the claw, in use, away from the ground. Such a slipper will be referred to as of the kind described.

Although such a slipper has been effective in reducing the pain and distress in lame cows, because all of the weight carried by the affected leg is transferred to one claw of the hoof, the application of such a slipper puts extra burden on the flexor tendons.

According to the present invention a slipper of the kind described has a sole which is formed so that, when the slipper is placed lattice down on level ground, the upper surface of the sole slopes downwards from back to front.

The sloping sole takes the pressure off the flexor tendons.

Preferably the upper surface of the sole slopes along its entire length. The angle of slope of the upper surface of the sole to the horizontal when the slipper is placed lattice down on level ground is preferably 1 to 5°, is more preferably 1.5 to 2° and is most preferably substantially 1.8°. The sole is arranged to be thin enough in voids between the ribs so that a hole can be readily punched for drainage purposes.

Other improvements which we have made include having at least one rib of the lattice reducing in width in the direction away from the sole. Also, the back corner of the slipper which, in use, will face the inside of the hoof is curved with a radius of curvature of between 8 and 12mm. This prevents interference with the other claw, thereby preventing pressure on and damage to the soft heel.

An example of a slipper constructed in accordance with the present invention will now be described with reference to the accompanying drawing, in which:
Fig. 1 is a side elevation of the slipper,
Fig. 2 is a plan view of the slipper,
Fig. 3 is an elevation of the claw insert end of the slipper with the back of the lattice cut away;
Fig. 4 shows a detail of a portion of the slipper shown in Fig. 3;
Fig. 5 is a cross section through a rib of the lattice; and
Fig. 6 is an underneath plan of the slipper.

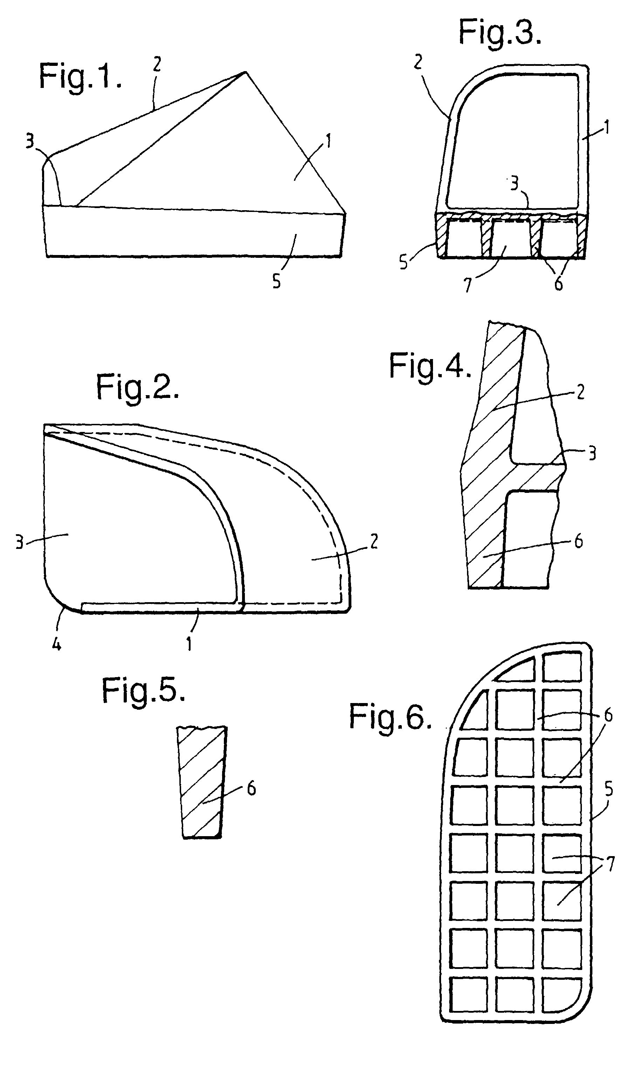

The illustrated surgical slipper comprises an injection moulded unit, with a left claw configuration, which incorporates an upper consisting of a vertical part 1 which fits between the claws of the foot at the cleft, and a curved part 2 which can be considered to be the conventional upper part of a shoe, slipper or clog. This upper configuration has a base or sole 3 which is internally smooth and slopes from back to front downwards at an angle of 1.8° with respect to the horizontal. The sole 3 is integral with the vertical part 1 and curved part 2. The corner 4 of the sole behind the vertical part 1 is rounded with a radius of curvature of 10mm. A base or sole 3 has an external or wearing surface 5 which is moulded in a lattice pattern and which effects a cushioning mode on the claw when in use. As can be seen in Figs. 4 and 5, each rib 6 of the lattice tapers in section from top to bottom. It has been found that, when in use, the lattice voids 7 tend to consolidate with debris or detritus and this soon fills voids to the surface level so producing a contact area which is mainly compacted debris to ground rather than plastic to ground and this has the effect of rendering the footing anti-slip.

Although the illustrated slipper has a left claw configuration, a right claw version is equally contemplated. This is simply a mirror image of the left claw version, so no specific description is necessary.

## Claims

1. A surgical slipper for cleft footed animals in either a left or right claw configuration, the slipper comprising a sole (3) and upper (1,2) which together define a cavity into which one claw of the cleft footed animal is, in use, fitted, with a lattice in the form of an array of intersecting ribs (6) projecting from the underside of the sole; wherein the ribs are thick enough to hold the claw, in use, away from the ground, characterised in that the sole (3) is formed so that, when the slipper is placed lattice down on level ground, the upper surface of the sole slopes downwards from back to front.

2. A slipper according to claim 1, wherein the upper surface of the sole (3) slopes along its entire length.

3. A slipper according to claim 1 or claim 2, wherein the angle of slope of the upper surface of the sole (3) to the horizontal when the slipper is placed lattice down on level ground is 1 to 5°.

4. A slipper according to claim 3, wherein the angle is from 1.5 to 2°.

5. A slipper according to claim 4, wherein the angle is substantially 1.8°.

6. A slipper according to any one of the preceding claims, wherein at least one rib (6) of the lattice reduces in width in the direction away from the sole (3).

7. A slipper according to any one of the preceding claims, wherein the back corner (4) of the slipper which, in use, will face the inside of the hoof is curved with a radius of curvature of between 8 and 12mm.

8. A slipper according to any one of the preceding claims, wherein the sole is arranged to be thin enough in voids (7) between the ribs so that a hole can be readily punched for drainage purposes.

## Patentansprüche

1. Ein Stützschuh bzw. -pantoffel für klauenfüßige Tiere in entweder linker oder rechter Klauenkonfiguration, wobei der Schuh eine Sohle (3) und Obermaterial (1, 2) umfaßt, die zusammen eine Kavität definieren, in die eine Klaue des spaltenfüßigen Tieres in Verwendung gepaßt ist, wobei ein Gitter in der Form einer Anordnung sich schneidender Rippen (6) von der Unterseite der Sohle hervorsteht, wobei die Rippen dick genug sind, um in Verwendung die Klaue vom Boden weg zu halten, **dadurch gekennzeichnet,** daß die Sohle (3) so gebildet ist, daß, wenn der Schuh mit dem Gitter nach unten auf ebener Erde angeordnet ist, die Oberseite der Sohle nach unten von hinten nach vom geneigt ist.

2. Ein Schuh gemäß Anspruch 1, wobei die Oberseite der Sohle (3) über ihre gesamte Länge geneigt ist.

3. Ein Schuh gemäß Anspruch 1 oder 2, wobei der Neigungswinkel der Oberseite der Sohle (3) zur Horizontalen 1 bis 5° beträgt, wenn der Schuh mit dem Gitter nach unten auf ebener Erde plaziert ist.

4. Ein Schuh gemäß Anspruch 3, wobei der Winkel zwischen 1,5 und 2° beträgt.

5. Ein Schuh gemäß Anspruch 4, wobei der Winkel im wesentlichen 1,8° beträgt.

6. Ein Schuh gemäß einem der vorhergehenden Ansprüche, wobei mindestens eine Rippe (6) des Gitters in der Breite in Richtung von der Sohle (3) weg abnimmt.

7. Ein Schuh gemäß einem der vorhergehenden Ansprüche, wobei die hintere Ecke (4) des Schuhs, der in Verwendung der Innenseite des Hufs zugewandt ist, mit einem Krümmungsradius zwischen 8 und 12 mm gekrümmt ist.

8. Ein Schuh gemäß einem der vorhergehenden Ansprüche, wobei die Sohle in Zwischenräumen (7) zwischen den Rippen dünn genug ausgebildet ist, so daß leicht ein Loch für Drainagezwecke gestanzt werden kann.

## Revendications

1. Chausson chirurgical pour des animaux à pied fourchu avec une configuration de griffe gauche ou droite, le chausson comportant une semelle (3) et un dessus (1, 2) qui définissent ensemble une cavité dans laquelle une griffe de l'animal à pied fourchu est logée lors de l'utilisation, avec un treillis sous la forme d'une rangée de nervures qui se coupent (6) qui dépassent du côté inférieur de la semelle; les nervures étant suffisamment épaisses pour maintenir la griffe, lors de l'utilisation, à l'écart du sol, caractérisé en ce que la semelle (3) est formée de telle sorte que, lorsque le chausson est placé avec le treillis vers le bas sur le sol, la surface supérieure de la semelle est inclinée vers le bas d'arrière en avant.

2. Chausson selon la revendication 1, dans lequel la surface supérieure de la semelle (3) est inclinée sur toute sa longueur.

3. Chausson selon la revendication 1 ou 2, dans lequel l'angle d'inclinaison de la surface supérieure de la semelle (3) par rapport à l'horizontale lorsque le chausson est placé avec le treillis vers le bas sur le sol est de 1 à 5°.

4. Chausson selon la revendication 3, dans lequel l'angle est de 1,5 à 2°.

5. Chausson selon la revendication 4, dans lequel l'angle est sensiblement de 1,8°.

6. Chausson selon l'une quelconque des revendications précédentes, dans lequel au moins une nervure (6) du treillis diminue en largeur dans la direction à l'écart de la semelle (3).

7. Chausson selon l'une quelconque des revendications précédentes, dans lequel le coin arrière (4) du chausson qui, lors de l'utilisation, fait face à l'intérieur du sabot est courbe avec un rayon de courbure entre 8 et 12 mm.

8. Chausson selon l'une quelconque des revendications précédentes, dans lequel la semelle est prévue pour être suffisamment mince dans des vides (7) entre les nervures de sorte qu'un trou peut facilement être poinçonné à des fins de drainage.
